(19) Europäisches Patentamt
European Patent Office
Office européen des brevets

(11) **EP 2 629 470 B1**

(12) **EUROPEAN PATENT SPECIFICATION**

(45) Date of publication and mention
of the grant of the patent:
**01.10.2014 Bulletin 2014/40**

(51) Int Cl.:
***H04L 12/801*** *(2013.01)*

(21) Application number: **12305184.9**

(22) Date of filing: **17.02.2012**

(54) **Apparatus and method for optimizing power consumption by traffic shaping in a transmission network**

Vorrichtung und Verfahren zur Optimierung des Stromverbrauch durch Verkehrsformung in einem Übertragungsnetzwerk

Appareil et procédé d'optimisation de la consommation d'énergie par mise en forme du trafic dans un réseau de communication

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**21.08.2013 Bulletin 2013/34**

(73) Proprietors:
• **Mitsubishi Electric R&D Centre Europe B.V.
1119 NS Schiphol Rijk Amsterdam (NL)**
Designated Contracting States:
**FR**
• **Mitsubishi Electric Corporation
Chiyoda-ku
Tokyo 100-8310 (JP)**
Designated Contracting States:
**AL AT BE BG CH CY CZ DE DK EE ES FI GB GR HR HU IE IS IT LI LT LU LV MC MK MT NL NO PL PT RO RS SE SI SK SM TR**

(72) Inventors:
• **Rosier, Corinne
35590 L'Hermitage (FR)**
• **Rollet, Romain
35590 l'Hermitage (FR)**

(74) Representative: **Cabinet Plasseraud
52, rue de la Victoire
75440 Paris Cedex 09 (FR)**

(56) References cited:
**US-A1- 2002 031 086     US-A1- 2005 063 402**

**Description**

The present invention relates to the field of data communications, and more particularly to traffic shaping in passive optical networks.

Typically, known transmission networks are designed with a view to maximise transmission rates, which is sometimes achieved at the expense of design considerations related to energy consumption. These power-related inefficiencies can often translate into a considerable waste of valuable energy, particularly at end user premises, of the majority of are now equipped with at least one computer, and in many cases, a growing number of networked data communication devices, such as digital media receivers, tablet computers and smartphones.

In such environments, Ethernet remains a ubiquitous transmission technology. Currently however Ethernet standards require both transmitters and receivers to operate continuously on a link regardless of the amount of data exchanged, although in general this amount is very low relative to link capacity. At the same time, the downlink and uplink throughputs offered to end users to communicate today are increasing at an unprecedented rate, based in large part on the expansion of optical technologies in local access networks that support Gigabits/s speeds at costs comparable to those of Digital Subscriber Line (xDSL) networks.

As an example of this, optical fibre can now be deployed in the "first mile", which connects the service provider central office to businesses and residential subscribers using Ethernet Passive Optical Network (EPON) architectures. In this context, the growing need for more energy efficient network equipment at end users' premises has resulted in efforts to try and incorporate these considerations into industry standards.

IEEE Standard 802.3az-2010, which was approved on 30 September 2010, specifies changes to several existing physical layers to enable energy-efficient operation of Ethernet, so-called EEE. Indeed, in 100 Megabits/s, 1 Gigabit and 10 Gbits/s data links, a relatively large amount of energy is used to keep the physical layer transmitter chip on at all times. In order to address this issue, EEE introduced a Low Power Idle (LPI) mode, in which transmission in the absence of data is limited to short periodic refresh intervals to maintain alignment between the transmitter and receiver. By using the LPI mode, large energy savings can be achieved when transmitters spend a significant proportion of their on-time in LPI mode.

In broad terms, the EEE standard defines mechanisms to stop transmission when there is no data to send and to resume it quickly when new packets arrive. This is done by introducing the aforementioned LPI mode instead of the continuous IDLE signal when there is no data to transmit. LPI defines large periods over which no signal is transmitted and small periods during which a signal is transmitted to refresh the receiver state.

By periodically sending an LPI indication signal (i.e. a "sleep" signal), the transmit chip (hereafter referred to as the PHY chip, or PHY) in the system can simply be turned off. When there is data to transmit, an IDLE signal is sent to wake the transmit system up before data is due to be sent. In this scenario, the data link is considered to be operational throughout, as the receiver circuit remains active even when the transmit path is in sleep mode.

Although the power savings related to using EEE systems vary from device to device, the energy consumption when the device is in sleep mode can be as low as 10% of that of the active mode. During transitions between the sleep mode and the active mode however, there is significant energy consumption, as many elements in the transceivers have to be active. Power consumption during these transitional periods can typically range from 50% to 100% of the active mode value.

The document US2002/0031086 discloses a method of processing first and second record packets of real-time information, which includes computing for each packet a deadline interval and ordering processing of the packets according to the respective deadline intervals.

In order to solve the problems associated with the prior art, the present invention provides a method of traffic shaping in a packet-switched network including a plurality of traffic classes, each traffic class having an associated packet delay constraint. The method comprises: controlling a packet transmitter to enter a sleep mode; receiving a packet belonging to a particular traffic class from an incoming connection, determining an arrival time of the received packet, and adding the packet to a queue; calculating a transmission time for the received packet, the transmission time representing the maximum time before the packet must be transmitted in order to respect the packet delay constraint of the traffic class to which the packet belongs; setting a transmission timer to the value of the difference between the calculated transmission time and the arrival time if the transmission timer has not previously been set or if the sum of a current value of the transmission timer and the arrival time is larger than the calculated transmission time; repeating the above steps until the transmission timer expires or until the number of packets in the queue reaches a given threshold; controlling the packet transmitter to exit the sleep mode; and transmitting the packets in the queue.

Preferably, the step of transmitting the packets in the queue further comprises: determining the number of packets in the queue; transmitting the determined number of packets in the previous step; determining, of the packets remaining in the queue, the transmission time of the packet in the queue having the smallest transmission time value; setting the transmission timer to the transmission time determined in the previous step; and transmitting the packets in the queue.

The transmission time can be equal to the sum of the arrival time and the maximum delay associated with the traffic class to which the packet belongs.

Preferably, the transmission time is equal to the sum of the arrival time and the smaller of the maximum delay associated with the traffic class to which the packet belongs and a predetermined maximum delay value.

Preferably, the predetermined maximum delay value is continuously updated based on the bit rate of the incoming connection.

Preferably, the transmission time includes the time required by the transmitter to transmit the packets in the queue.

Preferably, the method further comprises, after the step of transmitting the packets in the queue, the steps of: starting a sleep wait timer; and returning to the step of transmitting the packets in the queue if any packets are received before expiry of the sleep timer.

The present invention further provides a computer program product for a data-processing device, the computer program product comprising a set of instructions which, when loaded into the data-processing device, causes the device to perform the steps of the above method.

The present invention further provides an apparatus for traffic shaping in a packet-switched network including a plurality of traffic classes, each traffic class having an associated packet delay constraint. The apparatus comprises: a controller arranged to control a packet transmitter to enter a sleep mode; a receiver arranged to receive a packet belonging to a particular traffic class from an incoming connection, to determine an arrival time of the received packet, and to add the packet to a queue, the controller being further arranged to: calculate a transmission time for the received packet, the transmission time representing the maximum time before the packet must be transmitted in order to respect the packet delay constraint of the traffic class to which the packet belongs; set a transmission timer to the value of the difference between the calculated transmission time and the arrival time if the transmission timer has not previously been set or if the sum of a current value of the transmission timer and the arrival time is larger than the calculated transmission time; control the packet transmitter to exit the sleep mode upon expiry of the transmission timer or when the number of packets in the queue reaches a given threshold; and control the packet transmitter to transmit the packets in the queue.

Preferably, the controller is further arranged to: determine the number of packets in the queue; control the packet transmitter to transmit the determined number of packets; determine, of the packets remaining in the queue, the transmission time of the packet in the queue having the smallest transmission time value; set the transmission timer to the determined transmission time; and control the packet transmitter to transmit the packets in the queue.

The transmission time can be equal to the sum of the arrival time and the maximum delay associated with the traffic class to which the packet belongs.

Preferably, the transmission time is equal to the sum of the arrival time and the smaller of the maximum delay associated with the traffic class to which the packet belongs and a predetermined maximum delay value.

Preferably, the controller is arranged to continuously update the maximum delay value based on the bit rate of the incoming connection.

Preferably, the transmission time includes the time required by the transmitter to transmit the packets in the queue.

Preferably, the apparatus further comprises: sleep wait means arranged to, after the transmitter has transmit the packets in the queue, start a sleep wait timer and control the transmitter to transmit the packets in the queue if any further packets are received before expiry of the sleep wait timer.

The present invention provides several advantages over the prior art. For example, because the present invention improves baseline EEE performance using a Quality of Service (QoS) traffic shaping policy, it takes into account application constraints specific to different service classes in order to avoid data transmission delays, which delays affect upper-layer protocols and result in a negative impact on the processes/applications being run by a user. Moreover, because the present invention adapts the duration of the sleep period as a function of the current traffic level, it can efficiently adapt to rapid and significantly large variations in traffic.

Furthermore, the present invention can improve power saving for other layer-2 protocols such as those used in PON and Wi-Fi systems. Also, the present invention can easily be implemented, in that it requires little memory (i.e. a single FIFO).

Further benefits and advantages of the present invention will become apparent upon consideration of the following detailed description, together with the accompanying figures, in which:

FIGURE 1 is a diagram showing the operation of an EEE Low Power Idle (LPI) system in accordance with the prior art;
FIGURE 2 is a diagram of an exemplary data-communication network in which the present invention can be used;
FIGURE 3 is a functional block diagram of a system in accordance with one embodiment of the present invention;
FIGURE 4 is a flow chart of a method in accordance with one embodiment of the present invention;
FIGURE 5 is a diagram showing the operation of a system in accordance with one embodiment of the present invention;

FIGURE 6 is a state diagram showing the operation of a system in accordance with one embodiment of the present invention;

FIGURE 7 is a state diagram showing the operation of a system in accordance with one embodiment of the present invention;

FIGURES 8a and 8b are diagrams showing the operation of a system in accordance with one embodiment of the present invention;

FIGURE 9 shows a graph of power consumption relative to optimal power consumption $P_{op}$ versus $T_0$; and

FIGURE 10 shows a graph of traffic load versus To values for a device in accordance with two embodiments of the present invention.

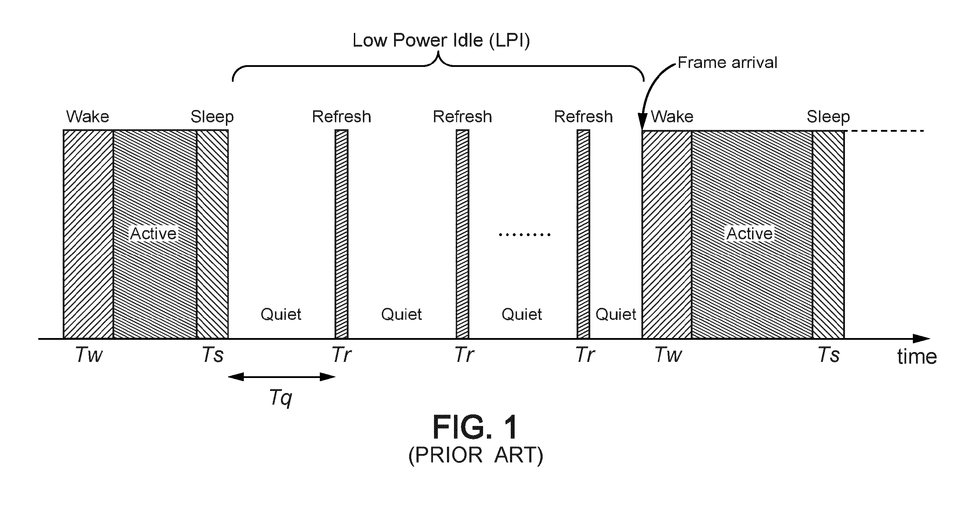

Figure 1 is a diagram showing the operation of an EEE LPI transmitter in accordance with the prior art. An EEE-compliant PHY operation can be described as follows. When packets are being sent, the device is in the active mode, and when no further packets are available for transmission, the link will typically enter the low power (or sleep) mode. As shown in Figure 1, the transition to sleep mode requires $T_s$ microseconds.

In the sleep mode, the PHY only sends refresh signals during short intervals $T_r$ and does not transmit during large intervals Tq. Once packets arrive for transmission, the link is activated again by sending a wake signal to the transmitter for a predefined period of time. As a consequence of receiving the wake signal, the PHY device then enters the normal operating state (i.e. the active mode). The transition from sleep mode to wake mode requires $T_w$ seconds. After the link is active, one or more packets can be sent.

As can be seen from Figure 1, EEE adds an overhead to every burst of one or more back-to-back packets sent by a PHY. This overhead includes the time required to wake the link from idle ($T_w$) and the time required to put the link back to sleep mode ($T_s$).

In the most favourable conditions (i.e. when the system is dormant), a non-EEE compliant PHY can consume up to 10 times more power than an EEE compliant PHY. In the least favourable conditions however (i.e. when the system never enters sleep mode), a non-EEE compliant PHY will consume the same amount of power than an EEE compliant PHY. As will be appreciated, a typical system will not always be dormant, nor will it constantly be transmitting, and so the above ratios must therefore be weighted in accordance with the time spent in a dormant state compared to the time spent in an active state.

Moreover, the performance of an EEE-compliant PHY will be impacted by latency, as the values of the sleep transition ($T_s$) and wake transition ($T_w$) are large with respect to the duration of an Ethernet frame. At 1Gb/s for example, the minimum overhead is of $198.5\mu s$ ($T_{s\,(min.)} = 182\mu s$, $T_w = 16.5\mu s \rightarrow T_s + T_w = 198.5\mu s$), while the Ethernet frame duration, the so-called T*frame,* is merely equal $12\mu s$ for the more common length frame of 1514 bytes.

Furthermore, and as mentioned above, EEE adds overhead, in that no transmission is possible during $T_s$ and $T_w$. This overhead inevitably has an impact on power consumption. This is because the power consumption during sleep and wake periods is maximum (i.e. the active mode is required). In addition, entry into the sleep mode is simply not possible if the inter-frame time interval is shorter than a given threshold (i.e. the minimum $T_s$).

Accordingly, EEE-compliant PHYs exhibit poor power-saving performance when they experience medium bit rates and/or when dealing with short packets.

The present invention deals with the above mentioned issues by proposing a Quality of Service (QoS) based traffic shaping policy to improve baseline EEE performance, as described in the non-limiting exemplary embodiment set out below.

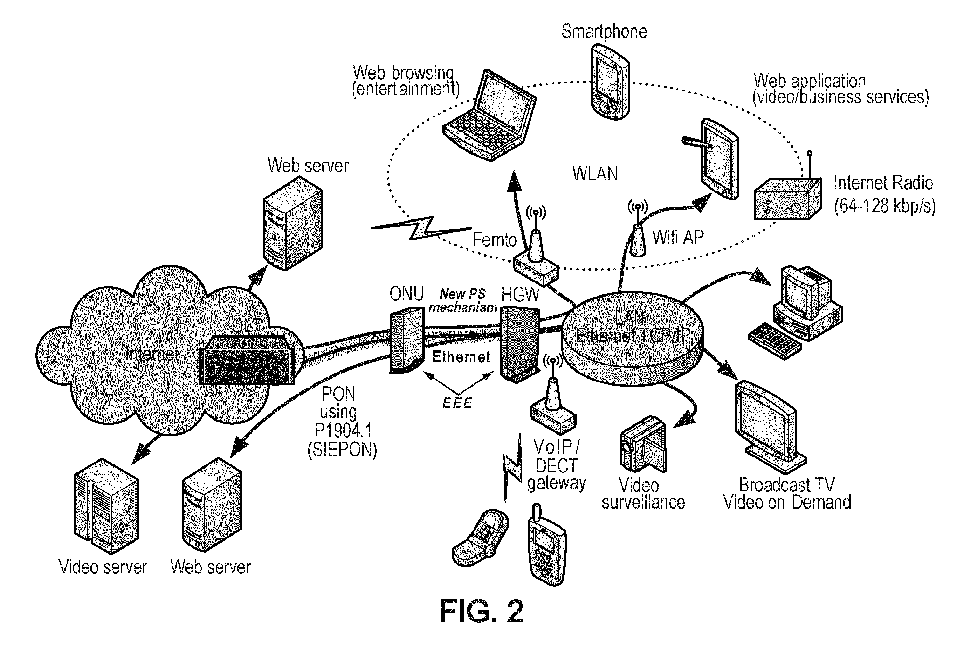

Figure 2 shows an exemplary data-communication network in which the present invention can be used. The home environment topology shown in Figure 2 is representative of typical networking needs, in terms of equipment, for premises equipped with a Home Gateway (HGW) connected to an Ethernet Passive Optical Network (EPON) Optical Network Unit (ONU) via a high speed Ethernet link.

In this topology, the main user owns a number of telephones, smartphones, video devices, laptops, PCs, tablet computers, etc. Each of these devices is targeted to a specific use or can be used for a variety of different uses. These uses include digital television services (e.g. for example broadcast TV or Video on Demand), web applications (e.g. entertainment, gaming, music, video and business services), telephony (VoIP), video surveillance or webcams, telecommuting, etc.

In the example network of Figure 2, the Home Gateway (HGW) and ONU are two separate devices linked by an Ethernet 802.3 link over a 100 BASE-TX, 1000BASE-T or 10GBASE-T PHY Layer, and supporting Energy Efficient Ethernet (EEE). As will be appreciated by the skilled reader, the present invention can be used with other network architectures having different characteristics.

The present invention is advantageously applied to the two edges of the interface between an EPON ONU and a Home Gateway (HGW) as shown in topology of Figure 2.

The present invention can also be used between the ONU interface and the Optical Line Termination (OLT), by adjusting parameters, such as the size of the FIFO buffer, threshold value, etc, accordingly.

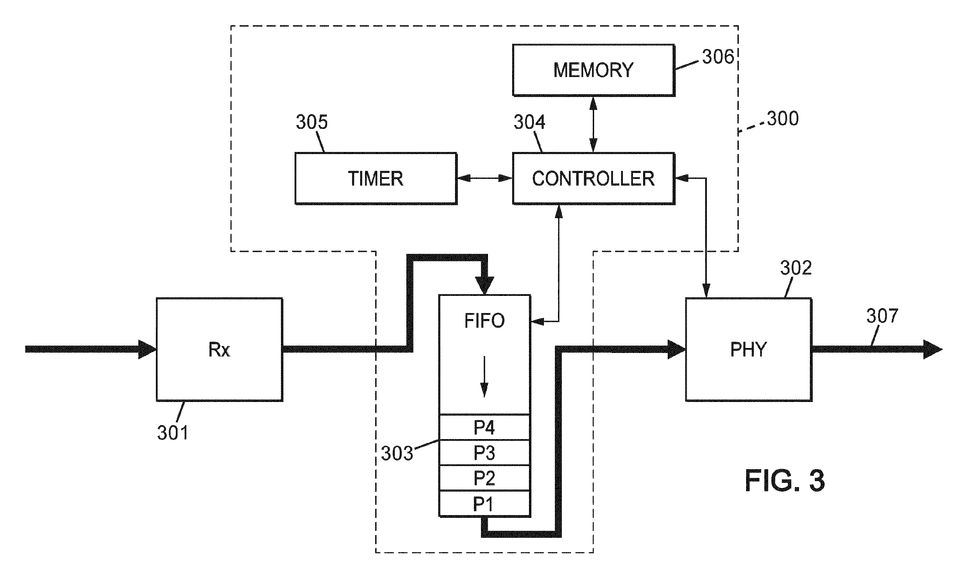

Figure 3 is a functional block diagram of a system 300 in accordance with one embodiment of the present invention. The system 300 of Figure 3 is implemented between the receiver 301 and PHY 302 transmitter of the EPON ONU of Figure 2.

The system 300 comprises a controller 304 for controlling the operation of PHY 302 and FIFO buffer 303. The system also comprises timer 305 and memory 306, each of which is used by controller 304 in the control of PHY 302 and FIFO buffer 303. In operation, the receiver 301 receives Ethernet packets which are to be transmitted to the HGW. Once received, the packets are placed in the FIFO buffer 303, in the order in which they are received. In Figure 3, for example, packet P1 was received first, P2 second, and so on. Using memory 306 and the timer 305, the controller 304 then controls the operation of the FIFO buffer 303 and the PHY 302 in accordance with the method of the present invention, such that the packets are transmitted over the optical link 307 in accordance with the method of the present invention.

The parameter K corresponds herein to the size of the FIFO buffer 303, and is advantageously chosen in such a way as to allow the FIFO buffer 303 to absorb the maximum supportable delay for transient traffic of all relevant applications, which corresponds to the maximum $T_{class}$ value, with $T_{class}$ expressed in milliseconds. The selection of this parameter also depends on the capacity of the link. Assuming that link capacity is expressed in Megabits/s, K can be computed as follows:

$$K = (linkcapacity / 8) \times (\max Tclass / 1000)$$

For example, a FIFO buffer size K of 6,4 Mbytes would be appropriate for a PON link at 1Gb/s and a maximum $T_{class}$ fixed to 50 ms.

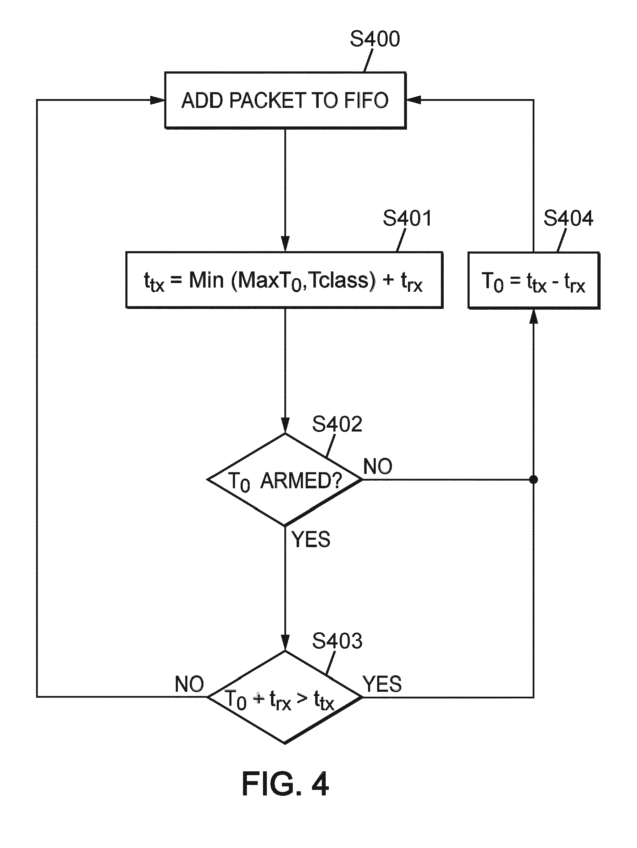

With reference to Figures 4 to 8, the operation of an embodiment of the present invention is described below. In this embodiment, the present invention uses the four classes of traffic defined in the Wi-Fi standard (i.e. IEEE 802.11x), namely Background Traffic (BK), Best Effort (BE), Video (VI) and Voice (VO). It will be clear to the skilled reader that the present invention can be used with other schemes of classifying traffic (e.g. the eight classes of traffic defined in the IEEE 802.1q standard).

In accordance with the present invention, for each class of traffic used in the present invention, a number of QoS parameters are defined, and in particular, a maximum allowed delay will be defined. Accordingly, a system operating in accordance with the present invention can support as many traffic classes as needed and/or whished by the operator. If one considers Transmission Control Protocol (TCP) traffic (either BE or BK traffic), for example, several applications communicating over TCP may have characteristics and requirements that could justify some form of sub classification. Thus, the BE traffic class could be further subdivided into "Interactive BE" and "Non-Interactive BE" classes, for example. The present invention can operate using any class configuration and adapt to any changes in the parameters of the traffic classes used.

In the following, $T_0$ is defined as a timer, the expiration of which will trigger a transition to the transmit (Tx) state. To corresponds to the wait time that the system will implement before triggering transmission of any incoming packets. Before To expires, the PHY of the system can be left in the sleep mode. The To timer is bound to a unique First-In-First-Out (FIFO) buffer 303 in which all data packets of all types are stored. In the following description, $T_0$ is expressed in milliseconds and is set with respect to the oldest packet in the FIFO buffer 303.

In the present embodiment, in order for the traffic shaping of the present invention to be imperceptible from a networked user's perspective, the value of To must never exceed half of the Round Trip Time (RTT) on the link for a given traffic class. An example of an appropriate value is between 10ms and 40ms, assuming that the RTT values for the different traffic categories used vary between 10ms and 60ms, with a mean RTT of approximately 30ms. Technical details in regard to how T0 can be automatically calculated using the present invention will be described below.

$maxT_0$ is defined as the optimal value associated with the To timer at a given time, and which the latter must not exceed to respect QoS traffic constraints. The $maxT_0$ value depends on the maximum power consumption threshold that an operator is willing to support, in relation to ideal power values. As described below, $maxT_0$ is advantageously used in one embodiment of the present invention in order to limit the maximum delay introduced by the system for situations in which large $T_{class}$ values can make gains in power savings negligible with respect to significant increases in delay, thereby avoiding unnecessary delays. $maxT_0$ is also a function of the incoming traffic rate, as described below, and is also herein expressed in milliseconds.

$n_0$ is defined herein as the number of packets in the FIFO buffer 303 when To expires or when Th is reached, when the system is in sleep mode, as described below.

$T_1$ is defined herein as the timer value associated to a short guard time interval before the PHY returns to the sleep mode (i.e. in the LPI mode) after having transmitted the data contained in the FIFO buffer 303. Typically, the value of this timer is set to the approximate value of the LPI overhead, which is computed as the sum of the transition time to go from wake mode to sleep mode and the transition time to go from sleep mode to wake mode. In one embodiment of the invention, this value also includes the minimum time associated with at least one refresh cycle, thus:

$$T_1 = T_s + T_w [[+ T_r ][+ T_r ][+ T_r ]..]$$

$T_{class}$ is defined herein as the maximum delay associated with a given traffic class. Each traffic class will have associated with it its own $T_{class}$ value, which is typically a predefined constant value that can be defined and/or updated by an operator; and is herein expressed in milliseconds. As an illustrative example, the $T_{class}$ values for the system described in accordance with Figures 4 to 8 are $T_{BK}$ = 100ms, $T_{BE}$ = 50ms, $T_{VI}$ = 30 ma and $T_{VO}$ = 10 ms.

Th is defined herein as the maximum threshold of packets in the FIFO buffer 303, above which threshold the system triggers a return to the active mode in order to begin transmission of data, regardless of whether the To timer has expired or not. In a preferred embodiment, the Th will be expressed as a percentage of the capacity of the FIFO buffer 303 and will be set to a value which is close to the maximum capacity of the FIFO buffer 303 (e.g. 95%). B(t) is defined herein as the number of bytes in FIFO buffer 303 at time t.

$P_{op}$ is defined herein as the optimal power consumption, expressed in milliwatts, and can be computed using the formula:

$$P_{op} = \alpha P_A + (1 - \alpha) P_{LPI}$$

where, $\alpha$ = input bit rate / output bit rate, $P_A$ is the power consumed in active mode (in milliwatts), and $P_{LPI}$ is the power consumed in LPI mode.

As mentioned above, the present invention requires a single FIFO buffer 303, in that all packets, regardless of which traffic class they are associated with, will be received by the FIFO buffer 303.

Advantageously, $T_0$ is chosen to minimize the power consumption while considering the instant amount of input traffic. After selection of an acceptable level of additional power compared to $P_{op}$, an optimal To value can be set according to the estimated amount of input traffic at that time, denoted $maxT_0$. To must never exceed $T_{class}$ in order to respect QoS delay constraints of end user.

Figure 4 is a flow chart showing the operation of the system 300 during sleep state, and in particular describes the arming and maintenance of the To timer in accordance with an embodiment of the present invention. As mentioned above, $T_0$ is the timer value which, when expired, will trigger a return of the PHY to active (or transmit) mode. Thus, the system will execute the process of Figure 4 while in sleep mode.

As packets are received by the system in sleep mode, in step S400, they are added to the FIFO buffer 303. Then, the process proceeds to step S401, in which maximum allowed packet transmission time, $t_{tx}$, is calculated for that packet. This is done using the following equation:

$$t_{tx} = Min(MaxT_0, T_{class}) + t_{rx}$$

where $t_{rx}$ is the time at which the packet was received. Alternatively, the maximum allowed packet transmission time $t_{tx}$ can be calculated by taking into account the time required to empty the buffer, i.e. the number of bits B(t) the FIFO buffer 303 divided by the transmission bit rate TxRate. In such a case, the above equation becomes:

$$t_{tx} = Min(MaxT_0, T_{class}) + t_{rx} - (8 \times B(t) / TxRate)$$

In the presently described embodiment, the time required to empty FIFO buffer 303 is negligible when compared to the other values in the equation, and so the former equation will be used. In other embodiments having different transmission rates and traffic classes, this second equation could be used.

Moreover, the presently described embodiment uses the $maxT_0$ value to limit unnecessary delays in situations where such delays would fail to provide significant improvements in power consumption. As will be appreciated however, in other embodiments of the invention, the $maxT_0$ value can be omitted altogether.

Thus, in at least one embodiment of the present invention, the above equation could simply be:

$$t_{tx} = T_{class} + t_{rx}$$

The maximum allowed packet transmission time $t_{tx}$ represents the maximum allowable time that the packet in question can be allowed to stay in the FIFO buffer 303 before being sent.

Once the $t_{tx}$ is calculated in step S401, a determination is made in step S402 as to whether the To timer has been armed, i.e. whether the To timer has been set in the timer 305. If To has not yet been set (indicating that the received packet is the first one in the FIFO buffer 303), $T_0$ is set to $t_{tx}$ in step S404 and the process begins again in step S400. As will be appreciated, once a first $T_0$ is set, the cycle described with reference to Figure 4 will be continued until the expiration of the timer To.

If in, step S402, it is determined that To has been set (indicating that the received packet is the first one in the FIFO buffer 303), a determination is made in step S403 as to whether the sum of the current value To (i.e. the time left in the timer To) and $t_{rx}$ is greater than the $t_{tx}$ which has just been calculated. If so, $T_0$ is set to $t_{tx}-t_{rx}$ in step S404 and the process begins again in step S400. If however the sum of the current value of To and $t_{rx}$ is not greater than the $t_{tx}$ which has just been calculated, the process returns to step S400 without modifying the current value of To.

It will be readily apparent to the skilled reader that the order of steps S402 and S403 can be reversed without significantly impacting the outcome of the process.

Using the above method, the To timer is systematically adjusted to maximise the delay in transmitting the packets that are received in the FIFO buffer 303 (resulting in increased energy efficient operation), while at the same time ensuring that the delay never exceeds that which can be permitted to guarantee that the packet with the most stringent traffic class requirement in the FIFO buffer 303 is delivered without perceptible delay.

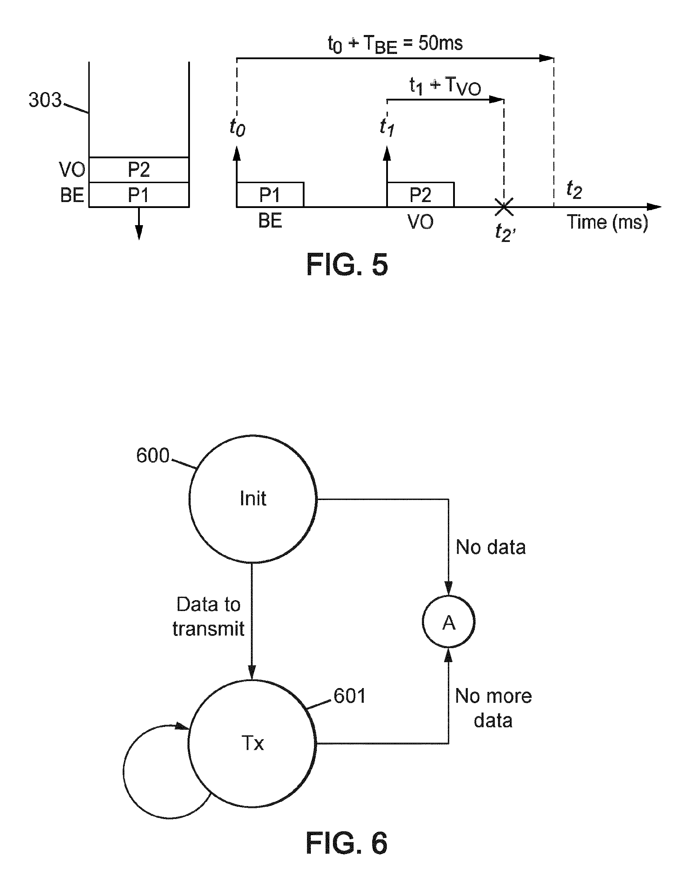

An example of the process of Figure 4 is shown in Figure 5, in which a first packet P1, belonging to the Best Effort (BE) traffic class is received at time to. In step S401, $t_{tx}$ is calculated as being 50ms, as $T_{BE}$ is equal to 50ms and $t_0$ is equal to zero. Then, because timer To has yet to be armed (i.e. it has not begun counting down), it will first be armed (not shown) and the process will proceed to step S404 in which timer To will be set to 50ms, before returning to step S400.

When packet P2 is received at time $t_1$, the process is repeated. A corresponding $t_{tx}$ is calculated, and is found to be equal to $t_1 + T_{VO}$, or $t_1 + 10ms$. As will be appreciated, the class relating to voice traffic has more stringent timing requirements than the class relating to best effort traffic.

Once the new $t_{tx}$ (which is linked to packet P2) is calculated, it is determined in step S402 that the timer To has been armed, having been set by the arrival of the initial packet P1. The process therefore proceeds to step S403, where it is determined that the sum of time remaining in the timer To and the receipt time of the second packet $t_1$ is larger than the sum of the receipt time of the second packed $t_1$ and the $T_{class}$ of the second packet (i.e. $T_{VO}$). In other words, the system in S403 determines that the time left on the timer $T_0$ is larger than $T_{VO}$ (i.e. the maximum permissible delay before packet P2 must be transmitted). In order to ensure QoS for packet P2, it is therefore necessary to readjust the value of timer To, in step S404, to a shorter value such that packet transmission will begin at time $t_{2'}$. This will ensure that packet P2 is transmitted without perceptible delay (i.e. within the boundaries of the VO traffic class timing requirements).

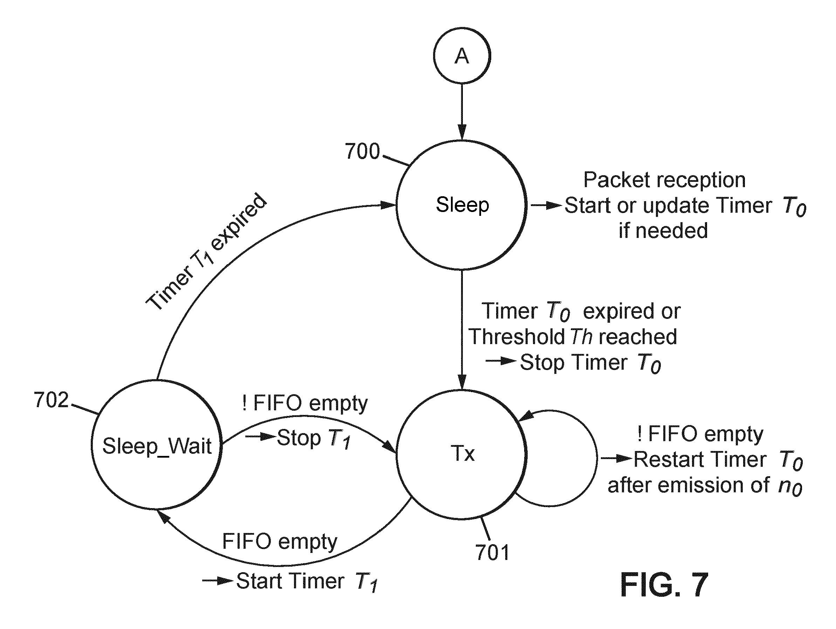

With reference to the state diagrams of Figures 6 and 7, the operation of the system 300 is described below.

With reference to Figure 6, in the initialisation state 600, if initial data have to be sent, the system enters transmission state 601, and remains in this state as long as required for transmission of all packets stored in the FIFO buffer 303. When the FIFO buffer 303 has been emptied in the transmission state, or if no data is present in the initialisation state 600, the system enters the sleep state, as shown in Figure 7.

In sleep state 700, a sleep state, the process of Figure 4 is engaged, as described above. Upon expiration of timer To, or if the number of packets being held in the FIFO buffer 303 reaches threshold Th, timer $T_0$ is stopped (i.e. disarmed) and the system enters the transmission state 701, in which state all packet awaiting transmission are released and sent over the link. Upon entering the transmission state 701, parameter no is set to they number of packets present in the FIFO buffer 303.

The system remains in transmission state 701 until no packets have been sent. Once no packets have been sent, and provided that there are still packets in the FIFO buffer 303, the timer $T_0$ is re-armed and set to the emission time of the most time-constrained packet (i.e. the packet with the smallest computed $t_{tx}$ at reception). In this situation, which situation results from the receipt of packets in the FIFO buffer 303 during the transmission state 701, the system remains in the transmission state 701 until the last packet remaining in the FIFO buffer is sent. This ensures that system delivers a maximum amount of traffic while it is awake and in the transmission state 701.

In some embodiments of the invention, when there are no more packets to be sent in the FIFO buffer 303, the system enters the sleep_wait state 702, and starts timer $T_1$. The purpose of the sleep_wait state 702 is to introduce a slight delay before passing from the transmission state 701 to the sleep state 700. This delay, represented herein by timer $T_1$, advantageously limits the overhead (i.e. LPI overhead) associated with unduly frequent changes from active to sleep mode. In the sleep_wait state 702, if new packets are received in the FIFO buffer 303 before timer $T_1$ expires, the system halts $T_1$ and returns to the transmission sate 701, in which state new packets are immediately transmitted. If, on the other hand, no new packets are received by the FIFO buffer 303 before the expiry of the $T_1$ timer, the system switches to the sleep state 700.

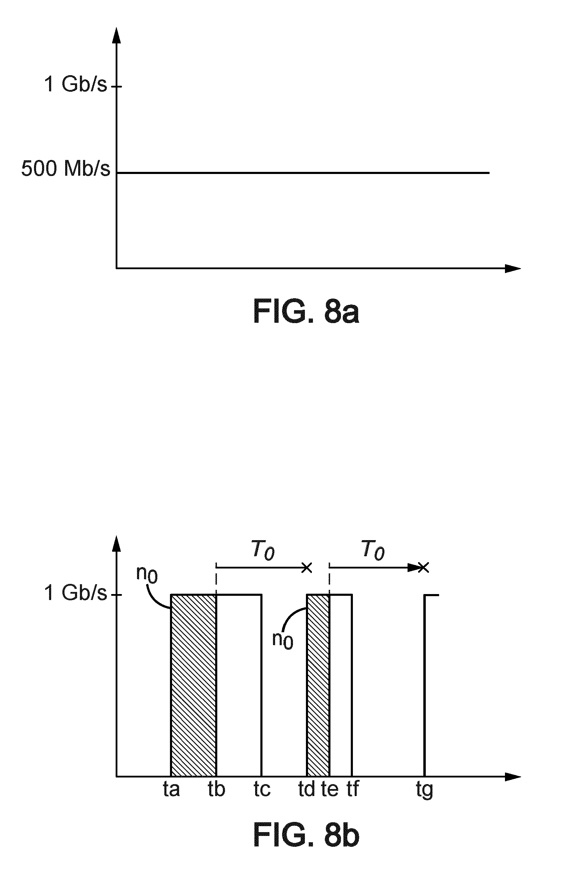

Figure 8 shows timing diagrams of the operation of a system in accordance with one embodiment of the present invention. Figure 8a represents a timing diagram of incoming traffic. In the example, the traffic input into the system is a constant 500Mb/s. Figure 8b represents a timing diagram of the outgoing traffic, after having been processed in accordance with the present invention. In this example, the output rate of the outgoing traffic is 1Gb/s. Thus, the load of the system of this example is 50% (i.e. 500M/1G).

At time to, the FIFO buffer 303 is being filled at a rate of 500Mb/s, until time $t_a$, when the system passes from sleep state 700 to the transmission state 701 and begins transmitting. During the transition from sleep state 700 to transmission state 701, the system stops timer To and determines the number no of packets in the FIFO buffer 303.

In transmission state 701, the system begins transmitting packets. At time $t_b$, when no packets have been transmitted, the system restarts timer To and continues transmitting until the FIFO buffer 303 is empty. At this point, the value of T0 is computed using the emission time of the most time-constrained packet (i.e. the packet with the smallest computed $t_{tx}$ at reception) left in the FIFO buffer 303.

At time $t_c$ the FIFO buffer is emptied and the system transitions from transmission state 701 to sleep_wait state 702 and a timer $T_1$ is begun. In this example, the value of the timer $T_1$ is shorter in duration than the minimum inter-packet time of the received traffic. Accordingly, the system will transition from the sleep_wait state 702 to the sleep state 700 after expiry of $T_1$. If timer $T_1$ was set to a value which was longer than the minimum inter-packet time of the received traffic, the system would have instead returned to the transmission state 701, in that the FIFO buffer 303 would be filed by a packet before expiry of timer $T_1$.

In the example of Figure 8, the system returns to sleep state 700 at time $t_c$, once $T_1$ has expired. In sleep state 700, the timer $T_0$ will be updated (if need be) in accordance with the process of Figure 4. If not updated, timer To will continue to count down from the value set after the transmission of the no packets (as shown in Figure 8b). Timer To will expire at time $t_d$, at which point timer $T_0$ will be stopped and the system will determine the number no of packets that is present in the FIFO buffer 303, before once more transitioning to the transmission state 701. After having transmitted no packets (at time $t_e$), the system restarts timer To and continues to transmit the packets until the FIFO buffer 303 is empty. At time $t_f$, the FIFO buffer is emptied and the system passes to sleep_wait state 702. In sleep state 700, the system updates timer To in accordance with the process of Figure 4 until expiration of To at time tg, where the system begins transmission again.

As mentioned above, $maxT_0$ is defined as the optimal value associated with the To timer at a given time, and which the latter must not exceed to respect QoS traffic constraints. The $maxT_0$ value depends on the maximum power consumption threshold that an operator is willing to support, in relation to ideal power values. $maxT_0$ is advantageously used in certain embodiments of the present invention in order to limit the maximum delay introduced by the system for situations in which large $T_{class}$ values can make gains in power savings negligible with respect to significant increases in delay.

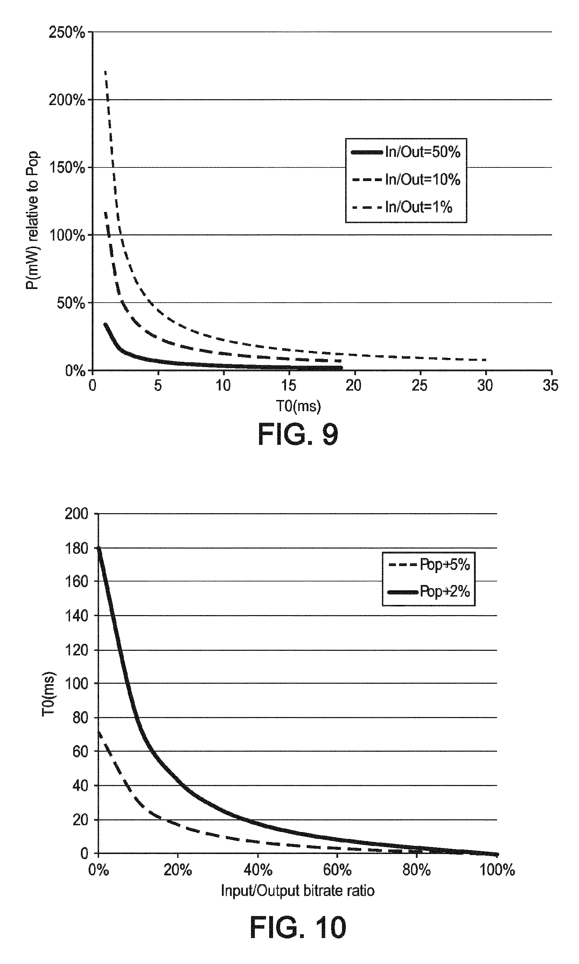

Examples of this are shown in Figure 9, which shows a graph of relative power consumption versus To. Relative power consumption is defined herein as actual power consumption relative to optimal power consumption $P_{op}$. The three curves in Figure 9 represents systems running at different traffic loads (i.e. input/output bit rate ratio).

As can be seen from Figure 9, the effect of increasing the value of To significantly decreases after 10ms, and becomes almost negligible after 15ms. Accordingly, in a case where a particular traffic class may have a very large $T_{class}$, it can be advantageous to avoid unnecessarily long delays (i.e. which do not result in significant decreases in relative power consumption) by making use of a $maxT_0$ value. As described above, by setting an appropriate $maxT_0$ value, and using the smaller of the $maxT_0$ and $T_{class}$ values to update To (as described with reference to the process of Figure 4), the present invention can ensure that QoS traffic constraints are respected, and avoid delays which, though not perceptible to users, may fail to provide significant improvements in power consumption.

Figure 10 shows a graph of traffic load versus To values for a device in accordance with one embodiment of the present invention. Performance analysis of the present invention shows that, for a given load (i.e. incoming/outgoing bit rate ratio), a minimum To value can be calculated so that the power consumption relative to $P_{op}$ is lower than a given threshold. The first curve (dashed line) represents a system which is arranged to operate to within 5% above the optimal power consumption $P_{op}$. The second curve (solid) represents a system which is arranged to operate to within 2% above the optimal power consumption $P_{op}$. Thus, it can be shown that the global performance of the shaping mechanism in accordance with the present invention depends on the value of To and the traffic load.

As described above, a $maxT_0$ value can be used in accordance with the present invention. As also mentioned above, this $maxT_0$ value is determined using an estimation of the input bit rate of the system, which will contribute to an estimation of the traffic load. The estimation of the traffic load can then be used to determine an appropriate $maxT_0$ using the relationships shown in Figure 10, for a given relative power consumption threshold. For example if, at a given time during operation, an estimation is made that the input bit rate is 20% of the value of the output bit rate, and it has been decided that the system should be run to within 5% of the optimal power consumption $P_{op}$, it can be seen from Figure 10 that a $maxT_0$ value of 18ms would be suitable. Thus, by continuously estimating the input bit rate of the system, it is possible to change the To timer value so that the power consumption does not exceed a relative threshold set by the administrator.

As will be appreciated by the skilled reader, estimation of the input bit rate can be performed in any number of known ways. One advantageous method of providing this estimate can be performed every time To expires, by dividing the number of packets no in the FIFO buffer 303 by the value of the current To timer.

Contrary to the method of the present invention, prior art methods teach towards waiting for reception of a first packet in the FIFO buffer 303 (i.e. after total delivery of the current burst of data in sleep mode) to restart To. This method however does not allow the control of latency and jitter when significant variations in throughput are experienced by the system.

For example, if a sudden increase in traffic arrives that is not yet taken into account in current $maxT_0$ computations, an unexpected accumulation of packets in the FIFO buffer 303 can occur that would provoke further delay and jitter.

Conversely if current $maxT_0$ estimations are well suited to a very high traffic load with narrow time values, and traffic throughput then falls suddenly, more energy will be consumed during a period in which short transmission intervals will emit the packets contained in the FIFO buffer 303, though because of the drop in throughput, the same packets could have been transmitted with significantly more delay, and therefore less power consumption. One advantage of the present invention is that, because $T_0$ is set after no packets have been transmitted, the system is able to anticipate To activation, thereby freeing the system from possible errors of approximating $maxT_0$ using inaccurate estimations of the current input bit rate.

In a system in which the To timer is started at the very end of the transmission cycle, $maxT_0$ must be very finely computed close to real traffic conditions to avoid limiting the outgoing throughput (especially for bursty traffic like TCP applications e.g. that may use all offered bandwidth) or introducing delay or jitter. Since traffic is bursty by nature, a high-performance system must be able to adapt quickly or to absorb the variations of load.

The skilled person will also realize that steps of various above-described methods can be performed by programmed computers. Accordingly the above-mentioned embodiments should be understood to cover storage devices containing machine-executable or computer-executable instructions to perform some or all of the steps of the above-described methods. The embodiments are also intended to cover computers programmed to perform the steps of the above-described methods.

The functionality of the elements shown in the Figures can be provided using either dedicated hardware and/or software. The expressions "processing", "processing means" and "processing module" can include, but is not limited to, any of digital signal processor (DSPs) hardware, network processors, application specific integrated circuits (ASICs), field programmable gate arrays (FPGAs), read only memories (ROMs) for storing software, random access memories (RAMs), and non volatile storage.

**Claims**

1. A method of traffic shaping in a packet-switched network including a plurality of traffic classes, each traffic class having an associated packet delay constraint, the method comprising:

   controlling a packet transmitter to enter a sleep mode;
   receiving a packet belonging to a particular traffic class from an incoming connection, determining an arrival time of the received packet, and adding the packet to a queue;
   calculating a transmission time for the received packet, the transmission time representing the maximum time before the packet must be transmitted in order to respect the packet delay constraint of the traffic class to which the packet belongs;
   setting a transmission timer to the value of the difference between the calculated transmission time and the arrival time if the transmission timer has not previously been set or if the sum of a current value of the transmission timer and the arrival time is larger than the calculated transmission time;
   repeating the steps of receiving, calculating and setting until the transmission timer expires or until the number of packets in the queue reaches a given threshold;
   controlling the packet transmitter to exit the sleep mode; and
   transmitting the packets in the queue.

2. The method of claim 1, wherein the step of transmitting the packets in the queue further comprises:

determining the number of packets in the queue;
transmitting the determined number of packets in the previous step;
determining, of the packets remaining in the queue, the transmission time of the packet in the queue having the smallest transmission time value;
setting the transmission timer to the transmission time determined in the previous step; and
transmitting the packets in the queue.

3. The method of any of the preceding claims, wherein the transmission time is equal to the sum of the arrival time and the maximum delay associated with the traffic class to which the packet belongs.

4. The method of any of claims 1 or 2, wherein the transmission time is equal to the sum of the arrival time and the smaller of the maximum delay associated with the traffic class to which the packet belongs and a predetermined maximum delay value.

5. The method of claim 4, wherein the predetermined maximum delay value is continuously updated based on the bit rate of the incoming connection.

6. The method of any of the preceding claims, wherein the transmission time includes the time required by the transmitter to transmit the packets in the queue.

7. The method of any of the preceding claims, further comprising, after the step of transmitting the packets in the queue, the steps of:

starting a sleep wait timer; and
returning to the step of transmitting the packets in the queue if any packets are received before expiry of the sleep timer.

8. A computer program product for a data-processing device, the computer program product comprising a set of instructions which, when loaded into the data-processing device, causes the device to perform the steps of the method of claims 1 to 8.

9. An apparatus for traffic shaping in a packet-switched network including a plurality of traffic classes, each traffic class having an associated packet delay constraint, the apparatus comprising:

a controller (304) arranged to control a packet transmitter to enter a sleep mode;
a receiver (301) arranged to receive one or more packets, each packet belonging to a particular traffic class from an incoming connection, to determine an arrival time of each of the one or more received packets, and to add each of the one or more received packets to a queue,
the controller being further arranged to, upon receipt of each packet:

calculate a transmission time for the received packet, the transmission time representing the maximum time before the packet must be transmitted in order to respect the packet delay constraint of the traffic class to which the packet belongs;
set a transmission timer to the value of the difference between the calculated transmission time and the arrival time if the transmission timer has not previously been set or if the sum of a current value of the transmission timer and the arrival time is larger than the calculated transmission time;
control the packet transmitter to exit the sleep mode upon expiry of the transmission timer or when the number of packets in the queue reaches a given threshold; and
control the packet transmitter to transmit the packets in the queue.

10. The apparatus of claim 9, wherein the controller (304) is further arranged to:

determine the number of packets in the queue;
control the packet transmitter to transmit the determined number of packets;
determine, of the packets remaining in the queue, the transmission time of the packet in the queue having the smallest transmission time value;

set the transmission timer to the determined transmission time; and
control the packet transmitter to transmit the packets in the queue.

11. The apparatus of any of claims 9 or 10, wherein the transmission time is equal to the sum of the arrival time and the maximum delay associated with the traffic class to which the packet belongs.

12. The apparatus of any of claims 9 or 10, wherein the transmission time is equal to the sum of the arrival time and the smaller of the maximum delay associated with the traffic class to which the packet belongs and a predetermined maximum delay value.

13. The apparatus of claim 12, wherein the controller (304) is arranged to continuously update the maximum delay value based on the bit rate of the incoming connection.

14. The apparatus of any of claims of claims 9 to 13, wherein the transmission time includes the time required by the transmitter to transmit the packets in the queue.

15. The apparatus of any of claims 9 to 14, further comprising:

sleep wait means arranged to, after the transmitter has transmit the packets in the queue, start a sleep wait timer and control the transmitter to transmit the packets in the queue if any further packets are received before expiry of the sleep wait timer.


**Patentansprüche**

1. Verfahren zur Verkehrsformung in einem paketvermittelten Netzwerk, welches mehrere Verkehrsklassen umfasst, wobei jede Verkehrsklasse eine zugehörige Paketverzögerungsbegrenzung aufweist, wobei das Verfahren das Folgende umfasst:

Steuern einer Paketsendeeinheit, in einen Ruhemodus einzutreten;
Empfangen eines Pakets, welches zu einer bestimmten Verkehrsklasse gehört, von einer eingehenden Verbindung, Bestimmen einer Ankunftszeit des empfangenen Pakets und Hinzufügen des Pakets zu einer Warteschlange;
Berechnen einer Sendezeit für das empfangene Paket, wobei die Sendezeit die maximale Zeit repräsentiert, bevor das Paket gesendet werden muss, um die Paketverzögerungsbegrenzung der Verkehrsklasse einzuhalten, zu welcher das Paket gehört;
Einstellen eines Sendezeitplaners auf den Wert der Differenz zwischen der berechneten Sendezeit und der Ankunftszeit, wenn der Sendezeitplaner zuvor nicht eingestellt worden ist, oder wenn die Summe aus einem aktuellen Wert des Sendezeitplaners und der Ankunftszeit höher als die berechnete Sendezeit ist;
Wiederholen der Schritte des Empfangens, Berechnens und Einstellens, bis der Sendezeitplaner abläuft oder bis die Anzahl der Pakete in der Warteschlange einen gegebenen Schwellenwert erreicht;
Steuern der Paketsendeeinheit, den Ruhemodus zu verlassen; und
Senden der Pakete in der Warteschlange.

2. Verfahren nach Anspruch 1, wobei der Schritt des Sendens der Pakete in der Warteschlange ferner das Folgende umfasst:

Bestimmen der Anzahl der Pakete in der Warteschlange;
Senden der ermittelten Anzahl der Pakete in dem vorhergehenden Schritt;
Bestimmen der Sendezeit für das Paket in der Warteschlange, welches den niedrigsten Sendezeitwert aufweist, von den Paketen, die noch in der Warteschlange verbleiben;
Einstellen des Sendezeitplaners auf die Sendezeit, die in dem vorhergehenden Schritt bestimmt worden ist; und
Senden der Pakete in der Warteschlange.

3. Verfahren nach einem der vorhergehenden Ansprüche, wobei die Sendezeit gleich der Summe aus der Ankunftszeit und der maximalen Verzögerung ist, die zu der Verkehrsklasse gehört, zu welcher das Paket gehört.

4. Verfahren nach Anspruch 1 oder 2, wobei die Sendezeit gleich der Summe aus der Ankunftszeit und dem kleineren aus der maximalen Verzögerung, die zu der Verkehrsklasse gehört, zu welcher das Paket gehört, und einem vorgegebenen maximalen Verzögerungswert ist.

5. Verfahren nach Anspruch 4, wobei der vorgegebene maximale Verzögerungswert kontinuierlich auf der Grundlage der Bitrate der eingehenden Verbindung aktualisiert wird.

6. Verfahren nach einem der vorhergehenden Ansprüche, wobei die Sendezeit die Zeit umfasst, die von dem Sender benötigt wird, um die Pakete in der Warteschlange zu senden.

7. Verfahren nach einem der vorhergehenden Ansprüche, welches nach dem Schritt des Sendens der Pakete in der Warteschlange ferner die folgenden Schritte umfasst:

Starten eines Ruhe-Wartezeitplaners und
Zurückkehren zu dem Schritt des Sendens der Pakete in der Warteschlange, wenn vor dem Ablauf des Ruhe-Zeitplaners irgendwelche Pakete empfangen werden.

8. Computerprogrammprodukt für eine Datenverarbeitungseinheit, wobei das Computerprogrammprodukt einen Satz von Befehlen umfasst, welcher, wenn er in die Datenverarbeitungseinheit geladen wird, bewirkt, dass die Einheit die Schritte des Verfahrens der Ansprüche 1 bis 8 durchführt.

9. Vorrichtung zur Verkehrsformung in einem paketvermittelten Netzwerk, welches mehrere Verkehrsklassen umfasst, wobei jede Verkehrsklasse eine zugehörige Paketverzögerungsbegrenzung aufweist, wobei die Vorrichtung das Folgende umfasst:

eine Steuerung (304), welche dafür eingerichtet ist, eine Paketsendeeinheit zu steuern, in einen Ruhemodus einzutreten;
einen Empfänger (301), welcher dafür eingerichtet ist, ein oder mehrere Pakete, wobei jedes Paket zu einer bestimmten Verkehrsklasse gehört, von einer eingehenden Verbindung zu empfangen, eine Ankunftszeit jedes der ein oder mehreren empfangenen Pakete zu bestimmen und jedes der ein oder mehreren empfangenen Pakete zu einer Warteschlange hinzuzufügen,
wobei die Steuerung ferner dafür eingerichtet ist, nach dem Empfang jedes Pakets das Folgende durchzuführen:

Berechnen einer Sendezeit für das empfangene Paket, wobei die Sendezeit die maximale Zeit repräsentiert, bevor das Paket gesendet werden muss, um die Paketverzögerungsbegrenzung der Verkehrsklasse einzuhalten, zu welcher das Paket gehört;
Einstellen eines Sendezeitplaners auf den Wert der Differenz zwischen der berechneten Sendezeit und der Ankunftszeit, wenn der Sendezeitplaner zuvor nicht eingestellt worden ist, oder wenn die Summe aus einem aktuellen Wert des Sendezeitplaners und der Ankunftszeit höher als die berechnete Sendezeit ist;
Steuern der Paketsendeeinheit, den Ruhemodus nach Ablauf des Sendezeitplaners zu verlassen, oder wenn die Anzahl der Pakete in der Warteschlange einen gegebenen Schwellenwert erreicht; und
Steuern der Paketsendeeinheit, die Pakete in der Warteschlange zu senden.

10. Vorrichtung nach Anspruch 9, wobei die Steuerung (304) ferner für das Folgende geeignet ist:

Bestimmen der Anzahl der Pakete in der Warteschlange;
Steuern der Paketsendeeinheit, die ermittelte Anzahl der Pakete zu senden;
Bestimmen der Sendezeit für das Paket in der Warteschlange, welches den niedrigsten Sendezeitwert aufweist, von den Paketen, die noch in der Warteschlange verbleiben;
Einstellen des Sendezeitplaners auf die bestimmte Sendezeit; und
Steuern der Paketsendeeinheit, die Pakete in der Warteschlange zu senden.

11. Vorrichtung nach Anspruch 9 oder 10, wobei die Sendezeit gleich der Summe aus der Ankunftszeit und der maximalen Verzögerung ist, die zu der Verkehrsklasse gehört, zu welcher das Paket gehört.

12. Vorrichtung nach Anspruch 9 oder 10, wobei die Sendezeit gleich der Summe aus der Ankunftszeit und dem kleineren aus der maximalen Verzögerung, die zu der Verkehrsklasse gehört, zu welcher das Paket gehört, und einem vorgegebenen maximalen Verzögerungswert ist.

**13.** Vorrichtung nach Anspruch 12, wobei die Steuerung (304) dafür eingerichtet ist, den maximalen Verzögerungswert kontinuierlich auf der Grundlage der Bitrate der eingehenden Verbindung zu aktualisieren.

**14.** Vorrichtung nach einem der Ansprüche 9 bis 13, wobei die Sendezeit die Zeit umfasst, die von dem Sender benötigt wird, um die Pakete in der Warteschlange zu senden.

**15.** Vorrichtung nach einem der Ansprüche 9 bis 14, welche ferner das Folgende umfasst:

ein Ruhe-Wartemittel, welches dafür eingerichtet ist, nachdem die Sendeeinheit die Pakete in der Warteschlange gesendet hat, einen Ruhe-Wartezeitplaner zu starten und die Sendeeinheit zu steuern, die Pakete in der Warteschlange zu starten, wenn vor dem Ablauf des Ruhe-Wartezeitplaners irgendwelche weiteren Pakete empfangen werden.

**Revendications**

**1.** Procédé de mise en forme de trafic dans un réseau à commutation par paquets incluant une pluralité de classes de trafic, chaque classe de trafic ayant une contrainte de retard de paquet associée, le procédé comprenant :

la commande d'un dispositif de transmission de paquets pour entrer dans un mode veille ;
la réception d'un paquet appartenant à une classe de trafic particulière en provenance d'une connexion entrante, la détermination d'un temps d'arrivée du paquet reçu et l'ajout du paquet à une file d'attente ;
le calcul d'un temps de transmission pour le paquet reçu, le temps de transmission représentant le temps maximum avant que le paquet doive être transmis de manière à respecter la contrainte de retard de paquet de la classe de trafic à laquelle le paquet appartient ;
le réglage d'une temporisation de transmission à la valeur de la différence entre le temps de transmission calculé et le temps d'arrivée si la temporisation de transmission n'a pas été précédemment réglée ou si la somme d'une valeur actuelle de la temporisation de transmission et du temps d'arrivée est supérieure au temps de transmission calculé ;
la répétition des étapes de réception, le calcul et le réglage jusqu'à ce que la temporisation de transmission expire ou jusqu'à ce que le nombre de paquets dans la file d'attente atteigne un seuil donné ;
la commande du dispositif de transmission de paquets pour quitter le mode veille ; et
la transmission des paquets dans la file d'attente.

**2.** Procédé selon la revendication 1, dans lequel l'étape de transmission des paquets dans la file d'attente comprend en outre :

la détermination du nombre de paquets dans la file d'attente ;
la transmission du nombre de paquets déterminé dans l'étape précédente ;
la détermination, parmi les paquets restants dans la file d'attente, du temps de transmission de paquet ayant la plus petite valeur de temps de transmission dans la file d'attente ;
le réglage de la temporisation de transmission au temps de transmission déterminé dans l'étape précédente ; et
la transmission des paquets dans la file d'attente.

**3.** Procédé selon l'une quelconque des revendications précédentes, dans lequel le temps de transmission est égal à la somme du temps d'arrivée et du retard maximum associé à la classe de trafic à laquelle le paquet appartient.

**4.** Procédé selon l'une quelconque des revendications 1 ou 2, dans lequel le temps de transmission est égal à la somme du temps d'arrivée et du plus petit parmi : le retard maximum associé à la classe de trafic à laquelle le paquet appartient et une valeur de retard maximum prédéterminée.

**5.** Procédé selon la revendication 4, dans lequel la valeur de retard maximum prédéterminée est actualisée de manière continue sur la base du débit binaire de la connexion entrante.

**6.** Procédé selon l'une quelconque des revendications précédentes, dans lequel le temps de transmission comprend le temps nécessaire au dispositif de transmission pour transmettre les paquets dans la file d'attente.

**7.** Procédé selon l'une quelconque des revendications précédentes, comprenant en outre, après l'étape de transmission des paquets dans la file d'attente, les étapes suivantes :

le déclenchement d'une temporisation d'attente de mise en veille ; et
le retour à l'étape de transmission des paquets dans la file d'attente si des paquets sont reçus avant l'expiration de la temporisation de veille.

8.  Produit de programme d'ordinateur pour un dispositif de traitement de données, le produit de programme d'ordinateur comprenant un jeu d'instructions qui, quand il est chargé dans le dispositif de traitement de données, fait exécuter au dispositif les étapes du procédé selon les revendications 1 à 8.

9.  Dispositif de mise en forme de trafic dans un réseau à commutation par paquets incluant une pluralité de classes de trafic, chaque classe de trafic ayant une contrainte de retard de paquet associée, le dispositif comprenant :

un dispositif de commande (304) agencé pour commander un dispositif de transmission de paquets pour entrer dans un mode veille ;
un récepteur (301) agencé pour recevoir un ou plusieurs paquets, chaque paquet appartenant à une classe de trafic particulière, en provenance d'une connexion entrante, pour déterminer un temps d'arrivée de chacun des un ou plusieurs paquets reçus et pour ajouter l'un ou les paquets reçus à une file d'attente,
le dispositif de commande étant agencé en outre pour, à la réception de chaque paquet :

calculer un temps de transmission pour le paquet reçu, le temps de transmission représentant le temps maximum avant que le paquet doive être transmis de manière à respecter la contrainte de retard de paquet de la classe de trafic à laquelle le paquet appartient ;
régler une temporisation de transmission à la valeur de la différence entre le temps de transmission calculé et le temps d'arrivée si la temporisation de transmission n'a pas été précédemment réglée ou si la somme d'une valeur actuelle de la temporisation de transmission et du temps d'arrivée est supérieure au temps de transmission calculé ;
commander le dispositif de transmission de paquets pour quitter le mode veille à l'expiration de la temporisation de transmission ou quand le nombre de paquets dans la file d'attente atteint un seuil donné ; et
commander le dispositif de transmission de paquets pour transmettre les paquets dans la file d'attente.

10. Dispositif selon la revendication 9, dans lequel le dispositif de commande (304) est agencé en outre pour :

déterminer le nombre de paquets dans la file d'attente ;
commander le dispositif de transmission de paquets pour transmettre le nombre de paquets déterminé ;
déterminer, parmi les paquets restants dans la file d'attente, le temps de transmission du paquet dans la file d'attente ayant la plus petite valeur de temps de transmission ;
régler la temporisation de transmission au temps de transmission déterminé ; et
commander le dispositif de transmission de paquets pour transmettre les paquets dans la file d'attente.

11. Dispositif selon l'une quelconque des revendications 9 ou 10, dans lequel le temps de transmission est égal à la somme du temps d'arrivée et du retard maximum associé à la classe de trafic à laquelle le paquet appartient.

12. Dispositif selon l'une quelconque des revendications 9 ou 10, dans lequel le temps de transmission est égal à la somme du temps d'arrivée et du plus petit parmi :

le retard maximum associé à la classe de trafic à laquelle le paquet appartient et une valeur de retard maximum prédéterminée.

13. Dispositif selon la revendication 12, dans lequel le dispositif de commande (304) est agencé pour actualiser de manière continue la valeur de retard maximum prédéterminée sur la base du débit binaire de la connexion entrante.

14. Dispositif selon l'une quelconque des revendications 9 à 13, dans lequel le temps de transmission comprend le temps nécessaire au dispositif de transmission pour transmettre les paquets dans la file d'attente.

15. Dispositif selon l'une quelconque des revendications 9 à 14, comprenant en outre :

des moyens d'attente de mise en veille agencés pour, après que le dispositif de transmission a transmis les paquets dans la file d'attente, déclencher une temporisation d'attente de mise en veille et commander le dispositif de transmission pour transmettre les paquets dans la file d'attente si n'importe quels autres paquets sont reçus avant l'expiration de la temporisation d'attente de mise en veille.

**FIG. 1**
(PRIOR ART)

EP 2 629 470 B1

**FIG. 2**

FIG. 3

**FIG. 4**

$t_0 + T_{BE} = 50ms$

$t_1 + T_{VO}$

303

$t_0$

$t_1$

$t_2$

VO | P2
BE | P1

P1
BE

P2
VO

$t_{2'}$

Time (ms)

FIG. 5

600

Init

No data

Data to
transmit

A

601

No more
data

Tx

FIG. 6

Packet reception
Start or update Timer $T_0$ if needed

Timer $T_0$ expired or
Threshold $Th$ reached
Stop Timer $T_0$

Timer $T_1$ expired

! FIFO empty
Stop $T_1$

FIFO empty
Start Timer $T_1$

! FIFO empty
Restart Timer $T_0$ after emission of $n_0$

Sleep
700

Sleep_Wait
702

Tx
701

A

FIG. 7

FIG. 8a

FIG. 8b

FIG. 9

FIG. 10

**EP 2 629 470 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020031086 A